# EUROPÄISCHE PATENTANMELDUNG

(11) **EP 0 817 426 A2**
(43) Veröffentlichungstag der Anmeldung: **07.01.1998**
(21) Anmeldenummer: 97111195.0
(22) Anmeldetag: 03.07.1997
(51) Int. Cl.: H04L 12/413

(54) **Verfahren zum Informationsaustausch zwischen Sende- und Empfangseinrichtungen aufweisenden Baueinheiten**

(30) Priorität: 03.07.1996 DE 19626781
(71) Anmelder: SIEMENS AKTIENGESELLSCHAFT, 80333 München (DE)
(72) Erfinder: Prey, Gerhard, Ing., 82223 Eichenau (DE)

(57) **Zusammenfassung**

Die normalerweise mit übergeordneten Einheiten (DLU-S0, DLU-S1) unter anderem auch auf einem gemeinsamen Zeitkanal Informationen austauschenden Baueinheiten (SLM0 bis SLMn), wozu unter Verwendung eines Kollisionsprüfbusses eine Zugriffssteuerung erfolgt, benützen den Kollisionsprüfbus bestimmungswidrig zur Kommunikation untereinander.

## Beschreibung

Die Erfindung betrifft ein Verfahren zum Informationsaustausch zwischen Sende- und Empfangseinrichtungen aufweisenden Baueinheiten gemäß dem Oberbegriff des Patentanspruches 1.

Es liegt demnach eine Konstellation vor, bei der die Baueinheiten zur Abgabe von Nutzdaten an eine übergeordnete Einheit bzw. zum Empfang solcher Nutzdaten von derselben über einen Datenbus im Falle einer ersten Art von Nutzdaten, beispielsweise Sprachinformationen, auf individuell zugeordnete Zeitkanäle zugreifen, wogegen im Falle einer zweiten Art von Nutzdaten, beispielsweise paketierte Daten, die für Servicemodule bestimmt sind bzw. von solchen stammen, auf einen oder mehrere den Baueinheiten gemeinsam zur Verfügung gestellte Zeitkanäle zugegriffen wird.

Um zu verhindern, daß es bei einem gemeinsamen Zeitkanal durch gleichzeitigen Zugriff zu Kollisionen kommt, ist bei diesem Konzept ein alle Baueinheiten verbindender und eine Schleife bildender Kollisionsprüfbus, auch CD-Bus (Collision-Detection-Bus) vorgesehen. Wenn eine Baueinheit mit einer Informationsaussendung beginnen möchte, gibt sie die Nutzinformation nicht nur auf den Datenbus sondern auch auf einen dem gemeinsamen Zeitkanal entsprechenden auf dem CD-Bus gebildeten Kollisionsprüfkanal und überwacht diesen auf den Rückempfang der von ihr ausgesendeten Nutzinformation. Nur wenn die Baueinheit augenblicklich die einzige ist, die auf den gemeinsamen Zeitkanal und damit auf den Kollisionsprüfkanal auf dem CD-Bus zugreift, wird sie ihre ausgesendete Nutzinformation unverfälscht zurückempfangen und kann mit der Informationsaussendung fortfahren. Andernfalls wird sie die Informationsaussendung abbrechen und zu einem späteren Zeitpunkt erneut versuchen.

Bei einem in der Praxis realisierten Beispiel für eine derartige Konstellation sind die genannten Baueinheiten Teilnehmeranschlußbaugruppen einer digitalen Fernsprechvermittlungsstelle für den Anschluß von Teilnehmerleitungen und Anschlußleitungen für Nebenstellenanlagen. Diese Teilnehmeranschlußbaugruppen sind Bestandteil von digitalen Teilnehmerleitungseinheiten, die lokal oder abgesetzt von der Fernsprechvermittlungsstelle betrieben werden.

Zu den zentralen Funktionseinheiten solcher Teilnehmerleitungseinheiten gehören unter anderem eine Steuerung sowie eine digitale Schnittstelleneinheit, über die ein Anschluß an mit den zentralen Teilen der Vermittlungsstelle verbindende Multiplexleitungen besteht.

Zum Zwecke des Austauschs von Signalisierungsinformationen zwischen der Steuerung einer digitalen Teilnehmerleitungseinheit und deren Teilnehmeranschlußbaugruppen besteht ein sternförmiges Leitungsnetz, an dessen Sternpunkt die Steuerung angeordnet ist. Ein Sternnetz hat gegenüber einer Verbindung über einen Bus den Vorteil, daß eine Störung innerhalb einer Teilnehmeranschlußbaugruppe keine Auswirkungen auf die übrigen Teilnehmeranschlußbaugruppen hat.

In den relativ seltenen Fällen, in denen ein Informationsaustausch zwischen den Teilnehmeranschlußbaugruppen erforderlich ist, wurde bisher dieses Sternnetz hierfür herangezogen. Dies fuhrt jedoch einerseits zur Notwendigkeit bei der im Sternpunkt angeordneten Steuerung Anschlußlagedaten und Informationen über sonstige die Kommunikation betreffende Voraussetzungen zu speichern und bewirkt zum anderen eine zusätzliche dynamische Belastung der Steuerung, die zu Lasten des eigentlichen Steuersignalverkehrs zwischen Steuerung und Teilneh meranschlußbaugruppen führt.

Die Aufgabe der Erfindung besteht daher darin, unter den genannten Voraussetzungen einen Informationsaustausch zwischen den Baueinheiten zu ermöglichen, der nicht zu zusätzlichen Belastungen bestehender Einrichtungen im Umfeld der Baueinheiten führt.

Diese Aufgabe wird mittels der im Kennzeichen des Patentanspruchs angegebenen Maßnahmen gelost.

Die Erfindung macht sich die Erkenntnis zunutze, daß auf dem CD-Bus, der wie ausgeführt, dazu dient, einen kollisionsfreien Zugriff auf den wenigstens einen von den Baueinheiten gemeinsam genutzten auf dem Datenbus eingerichteten Übertragungskanal zu regeln, nur wenige Kollisionsprüfkanäle belegt sind, da die Nutzdatenübertragung auf dem Datenbus zum überwiegenden Anteil auf den Baueinheiten zugeordneten Sprachkanälen und nur zum geringen Teil auf einen gemeinsam zu nutzenden Nutzkanal stattfindet. Es kann sogar die Situation gegeben sein, daß der CD-Bus nur hardwaremäßig vorgeleistet aber überhaupt nicht zur Zugriffsregelng ausgenutzt ist, da wegen der Art der augenblicklich betriebenen Baueinheiten ein gemeinsam genutzter Datenkanal auf dem Datenbus gar nicht eingerichtet ist. Unter Ausnutzung dieser Gegebenheit wird dann erfindungsgemäß der CD-Bus sozusagen bestimmungswidrig zum Informationsaustausch zwischen den Baueinheiten und nicht nur zur Zugriffsregelung herangezogen.

Nachstehend wird die Erfindung anhand eines Ausführungsbeispiels unter Bezugnahme auf eine Zeichnung näher erläutert.

In der Zeichnung zeigen:
Figur 1 das Übersichtsblockschaltbild einer digitalen Vermittlungsstelle, auf die das erfindungsgemäße Verfahren angewendet werden kann,
Figur 2 ein mehr ins einzelne gehendes Blockschaltbild einer Teileinheit einer solchen Vermittlungsstelle, deren Bestandteile speziell vom erfindungsgemäßen Verfahren betroffen sind.

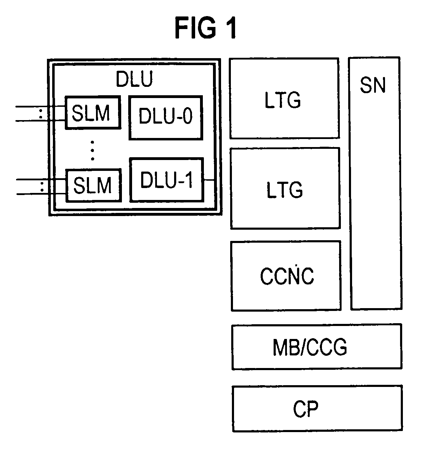

Das in Figur 1 dargestellte digitale Fernsprechvermittlungssystem weist als zentrale Bestandteile ein zentrales Koppelnetz SN, einen Koordinationsprozessor CP, eine Einrichtung zur Nachrichtenverteilung und zur zentralen Takterzeugung MB/CCG, sowie ein Steuerungssystem CCNC für ein Netz der zentralen Zeichengabekanäle auf.

Zum peripheren Bereich der Vermittlungsstelle gehören Leitungsanschlußbaugruppen LTG, von denen hier nur zwei dargestellt sind, sowie digitale Teilnehmerleitungseinheiten DLU, von denen hier nur eine dargestellt ist.

Die digitalen Teilnehmerleitungseinheiten DLU, die am Ort der Vermittlungsstelle oder aber auch davon abgesetzt angeordnet sein können, dienen dem Anschluß von Teilnehmerleitungen sowie von Anschlußleitungen für den Anschluß von Nebenstellenanlagen.

Diese digitalen Teilnehmerleitungseinheiten enthalten eine Anzahl von Teilnehmeranschlußbaugruppen SLM, die die eigentlichen Schnittstellen zu den erwähnten Leitungen bilden, sowie gedoppelte Leitungseinheitensysteme DLU-S0 und DLU-S1.

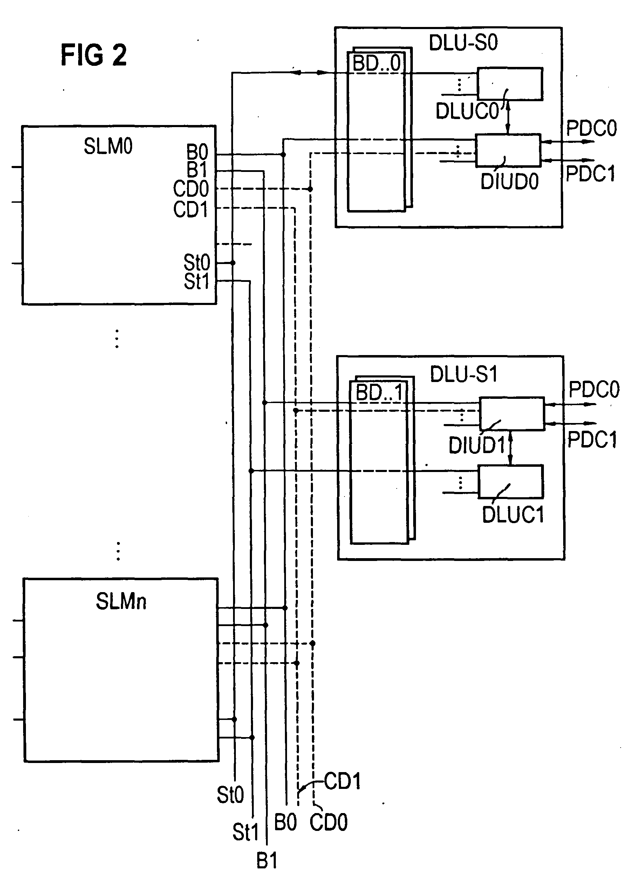

Die Figur 2 zeigt eine digitale Teilnehmerleitungseinheit DLU mehr ins einzelne gehend.

Wie dort ersichtlich, bestehen zwischen den Teilnehmeranschlußbaugruppen SLM und den Leitungseinheitensystemen DLU-S0 und DLU-S1 verschiedene Leitungssysteme. Es sind dies ein Steuerleitungssystem mit den Steuerleitungen St0 und St1, ein Datenleitungssystem mit den Busleitungen B0 und B1 sowie ein Kollisionsprüfbus, ein sogenannter Collision-Detection-Bus, mit Busleitungen CD0 und CD1.

Die Leitungseinheitensysteme DLU-S0 und DLU-S1 enthalten einen Busverteiler BD0 bzw. BD1, an den zu den Teilnehmeranschlußbaugruppen SLM hin die erwähnten Leitungssysteme angeschlossen sind und die eine Verbindung dieser Leitungssysteme zu den weiteren Bestandteilen der Systeme DLU-S0 bzw. DLU-S1 herstellen. Solche weiteren Bestandteile sind eine Steuerung DLUC0 bzw DLUC1, an die über die Busverteilereinheit BD0 bzw BD1 die Steuerleitungen St0 bzw. St1 geführt sind, ferner eine Schnittstelleneinheit DIUD, an die jeweils eine der erwähnten Busleitungen über jeweils eine der Busverteilereinheiten BD0 bzw. BD1 gefuhrt ist und an die zur Vermittlungsstelle hin PCM-Leitungen PCD0 und PCD1 (primary digital carrier) angeschlossen sind, die eine Verbindung mit den Leitungsanschlußbaugruppen LTG gemaß Figur 1 herstellen. In der Schnittstelleneinheit erfolgt auch die Zurückschleifung des CD-Busses.

Die Teilnehmeranschlußbaugruppen SLM der Figur 2 sind die Sende- und Empfangseinrichtungen aufweisenden Baueinheiten und die Leitungseinheitensysteme DLU-S0 und DLU-S1 sind die übergeordneten Einheiten im Sinne der Erfindung. Auf den erwähnten Busleitungen B0 und B1 findet eine Nutzdatenübertragung statt, wobei zur Übertragung von Sprachinformationen, die zu unterschiedlichen Verbindungen gehören, Zeitkanäle zugeordnet werden. Auf den Busleitungen kann ferner wenigstens ein weiterer Zeitkanal bestimmt werden, auf den sämtliche der Teilnehmeranschlußbaugruppen SLM Zugriff haben. Ein solcher Kanal dient im Fall des dargestellten Ausführungsbeispiels der Übertragung von paketorientierten Daten, die die Teilnehmeranschlußbaugruppen im sogenannten D-Kanal von ISDN-Basisanschlüssen empfangen.

Um bei einem Zugriff auf einen solchen gemeinsamen Zeitkanal Kollisionen zu vermeiden, geben sendewillige Teilnehmeranschlußbaugruppen die für den gemeinsamen Kanal bestimmten Nutzinformationen außer auf den Datenbus B0 bzw. B1 zeitlich vorlaufend auch auf einen dem gemeinsamen Zeitkanal entsprechenden auf dem CD-Bus eingerichteten Kollisionsprüfkanal und überwachen diesen in Rückwärtsrichtung auf den Wiederempfang der ausgesendeten Nutzinformation. Wenn diese unverfälscht wieder empfangen wird, ist das ein Zeichen dafür, daß keine weitere Teilnehmeranschlußbaugruppe SLM gleichzeitig auf den gemeinsamen Nutzkanal zugreift. Im Falle des Wiederempfangs einer verfälschten Nachricht, was bedeutet, daß eine andere Teilnehmeranschlußbaugruppe gleichzeitig auf den gemeinsamen Zeitkanal zugreift, wird die Informationsaussendung abgebrochen und zu einem späteren Zeitpunkt erneut versucht.

In bestimmten Situationen besteht auch zwischen den Teilnehmeranschlußbaugruppen SLM die Notwendigkeit eines Austauschs von Daten, ohne daß über den Datenbus Daten zu senden sind oder die zumindest mit der Datenübertragung auf dem Datenbus in keinem direkten Zusammenhang stehen. Dies ist beispielsweise dann der Fall, wenn jeweils zwei solcher Anschlußbaugruppen aus Sicherheitsgründen sich gegenseitig vertreten können sollen.

Erfindungsgemäß wird nun ein solcher Datenaustausch über den CD-Bus abgewickelt, wozu auf diesem neben einem gegebenfalls bestehenden Kollisionsprüfkanal Zeitkanäle zur Nutzdatenübertragung eingerichtet werden. Dies ist möglich, da für den Zugriff auf die individuell zugeordneten Zeitkanäle auf dem Datenbus, die den überwiegenden Teil der der dort gebildeten Zeitkanäle ausmachen, keine Kollisionssteuerung erforderlich ist und demnach nur ein oder höchstens wenige Kollisionsprüfkanäle auf dem CD-Bus eingerichtet sein müssen. Wie oben dargelegt, kann es auch Situationen geben, in denen der CD-Bus augenblicklich zur Zugriffsregelung überhaupt nicht ausgenutzt ist.

Im Gegensatz zu der bisherigen Durchführung einer direkten Kommunikation der Teilnehmeranschlußbaugruppen SLM untereinander, die über das Steuerleitungssystem mit den Steuerleitungen St0 und St1 und eine Steuerung DLUC in einem Leitungseinheitensystem DLU-S abgewickelt wird, belastet die erfindungsgemäße Kommunikation der Teilnehmeranschlußbaugruppen untereinander die Steuerung DLUC nicht.

## Patentansprüche

1. Verfahren zum Informationsaustausch zwischen Sende- und Empfangseinrichtungen aufweisenden Baueinheiten, die Nutzdaten an eine übergeordnete Einheit abgeben und von derselben empfangen, wozu sie im Falle von Nutzdaten einer ersten Art auf individuell zugeordnete Zeitkanäle und im Falle von Nutzdaten einer zweiten Art auf wenigstens einen allen Baueinhheiten zur Verfügung stehenden gemeinsamen Zeitkanal eines auf einem Datenbus gebildeten Zeitmultiplexsystems zugreifen, wobei zur Vermeidung von Kollisionen beim Zugriff auf einen gemeinsamen Zeitkanal auf einem eine Schleife bildenden die Baueinheiten verbindenden Kollisionsprüfbus für jeden der gemeinsamen Zeitkanäle ein Kollisionsprüfkanal gebildet ist, auf dem die Baueinheiten außer auf dem gemeinsamen Zeitkanal die abzugebenden Nutzinformationen aussenden und über den sie in Rückwärtsrichtung diese ausgesendeten Informationen wieder zugeführt bekommen, woraufhin sie je nach dem, ob die zurückgesendeten Informationen durch Zusammentreffen mit gleichzeitig von anderen Baueinheiten ausgesendeten Informationen verändert sind oder nicht ihre Nutzinformationsaussendung abbrechen oder fortsetzen, **dadurch gekennzeichnet,** daß der Informationsaustausch zwischen den Baueinheiten (SLM) in Zeitkanälen stattfindet, die auf dem Kollisionsprüfbus (CD-B) gebildet sind.
